(19) Europäisches Patentamt
European Patent Office
Office européen des brevets

(11) **EP 2 430 825 B1**

(12) **FASCICULE DE BREVET EUROPEEN**

(45) Date de publication et mention
de la délivrance du brevet:
**31.07.2013 Bulletin 2013/31**

(21) Numéro de dépôt: **10727770.9**

(22) Date de dépôt: **07.05.2010**

(51) Int Cl.:
**H04M 9/08** (2006.01)

(86) Numéro de dépôt international:
**PCT/FR2010/050888**

(87) Numéro de publication internationale:
**WO 2010/130928 (18.11.2010 Gazette 2010/46)**

(54) **PROCEDE DE SELECTION D'UN MICROPHONE PARMI DEUX MICROPHONES OU PLUS, POUR UN SYSTEME DE TRAITEMENT DE LA PAROLE TEL QU'UN DISPOSITIF TELEPHONIQUE "MAINS LIBRES" OPERANT DANS UN ENVIRONNEMENT BRUITE**

VERFAHREN ZUM AUSWÄHLEN EINES VON ZWEI ODER MEHR MIKROFONEN FÜR EIN SPRACHVERARBEITUNGSSYSTEM, WIE ETWA EINE FREIHAND-TELEFONEINRICHTUNG, DIE IN EINER GERÄUSCHBEHAFTETEN UMGEBUNG OPERIERT

METHOD FOR SELECTING A MICROPHONE AMONG A PLURALITY OF MICROPHONES IN A SPEECH PROCESSING SYSTEM SUCH AS A HANDS-FREE TELEPHONE DEVICE OPERATING IN A NOISY ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **14.05.2009 FR 0953176**

(43) Date de publication de la demande:
**21.03.2012 Bulletin 2012/12**

(73) Titulaire: **Parrot**
**75010 Paris (FR)**

(72) Inventeurs:
• **VITTE, Guillaume**
**F-75003 Paris (FR)**

• **BRIOT, Alexandre**
**F-75010 Paris (FR)**
• **PINTO, Guillaume**
**F-75004 Paris (FR)**

(74) Mandataire: **Dupuis-Latour, Dominique**
**Bardehle Pagenberg**
**10, boulevard Haussmann**
**75009 Paris (FR)**

(56) Documents cités:
**EP-A1- 1 564 980       WO-A1-2007/099222**
**US-A1- 2007 218 959**

EP 2 430 825 B1

**Description**

L'invention concerne le traitement de la parole en milieu bruité.

Elle concerne notamment, mais de façon non limitative, le traitement des signaux de parole captés par des dispositifs de type "mains-libres" pour véhicules automobiles.

Ces appareils comportent un microphone ("micro") sensible captant non seulement la voix de l'utilisateur, mais également le bruit environnant, bruit qui constitue un élément perturbateur pouvant aller, dans certains cas, jusqu'à rendre incompréhensibles les paroles du locuteur. Il en est de même si l'on veut mettre en oeuvre des techniques de reconnaissance vocale, car il est très difficile d'opérer une reconnaissance de forme sur des mots noyés dans un niveau de bruit élevé.

Cette difficulté liée au bruit ambiant est particulièrement contraignante dans le cas des dispositifs "mains-libres" pour véhicules automobiles. En particulier, la distance importante entre le micro et le locuteur entraîne un niveau relatif de bruit élevé qui rend difficile l'extraction du signal utile noyé dans le bruit. De plus, le milieu très bruité typique de l'environnement automobile présente des caractéristiques spectrales non stationnaires, c'est-à-dire qui évoluent de manière imprévisible en fonction des conditions de conduite : passage sur des chaussées déformées ou pavées, autoradio en fonctionnement, etc.

Certains de ces dispositifs prévoient l'utilisation de plusieurs micros, généralement deux micros, et utilisent la moyenne des signaux captés, ou d'autres opérations plus complexes, pour obtenir un signal avec un niveau de perturbations moindre. En particulier, une technique dite *beamforming* met en oeuvre un réseau de microphones de manière à créer par des moyens logiciels relativement simples une directivité qui permet d'améliorer le rapport signal/bruit. Cette technique présuppose toutefois que la position du locuteur par rapport aux micros soit à peu près constante, ce qui est généralement le cas pour un téléphone de voiture utilisé par le conducteur (mais pas par le passager).

De façon générale, dans toutes les techniques dites de *beamforming,* pour obtenir une efficacité à peu près satisfaisante, un nombre important (au moins supérieur à quatre) de microphones est requis, ce qui n'est pas le cas dans la majorité des applications industrielles.

Pour cette raison, on utilise le plus souvent des techniques mettant en oeuvre un seul micro.

Dans ce cas il est préférable d'utiliser un micro unidirectionnel, offrant un meilleur rapport signal/bruit, mais dans une seule direction fixée, et donc pour une seule position du locuteur.

Un tel dispositif "mains-libres" pour véhicule automobile est par exemple décrit dans le WO 2008/049982 A1 (Parrot SA), qui décrit les divers traitements d'annulation et de suppression d'écho, de réduction de bruit, etc., appliqués à un signal capté par un micro unique recueillant le signal acoustique (bruité) du locuteur proche.

L'invention vise un tel système de traitement de la parole ne mettant en oeuvre qu'un seul micro (donc différent des systèmes de type *beamforming* ou autre), mais dans lequel cet (unique) micro est sélectionné automatiquement parmi deux micros distincts, ou parmi plusieurs micros d'un réseau de microphones.

Le but de l'invention est de proposer un procédé permettant de déterminer parmi ces deux micros ou parmi tous les micros du réseau, celui qui capte le signal de parole le moins bruité, de manière à pouvoir opérer ensuite divers traitements (débruitage, annulation d'écho, etc.) sur le signal capté par le micro ainsi déterminé, désigné ci-après "micro de référence".

On connaît diverses techniques de sélection d'un microphone parmi plusieurs, par exemple dans un dispositif de téléconférence tel que celui décrit par le EP 1 564 980 A1, comprenant plusieurs micros tournés vers les participants installés autour du dispositif. Ce document décrit des moyens de sélection dynamique aptes à discriminer entre parole et bruit pour n'activer à un instant donné que le micro situé face au locuteur actif.

Dans le cas d'un dispositif de type "mains-libres" pour véhicule automobile évoqué plus haut, la situation la plus fréquente (quoique non limitative) est celle d'un système à deux micros. Plusieurs configurations sont alors envisageables.

Une première configuration consiste à prévoir deux micros directionnels placés assez proches l'un de l'autre, par exemple au deux extrémités de la façade d'un autoradio en partie centrale de l'habitacle du véhicule, l'un des micros ayant le lobe principal de son diagramme de directivité orienté vers le conducteur et l'autre micro, vers le passager.

Une autre configuration consiste à prévoir deux micros éloignés, par exemple placés en hauteur, aux angles extrêmes du plafonnier du véhicule, ou aux deux extrémités de la planche de bord.

Dans l'un ou l'autre cas, le micro le plus efficace à sélectionner est le plus souvent celui qui est dirigé vers le locuteur actif (soit le conducteur, soit le passager). Mais il peut être parfois nécessaire de prendre en compte des situations particulières : ainsi, dans le cas d'un motard qui doublerait le véhicule par la gauche, il peut être préférable de sélectionner le micro droit, même si le locuteur est le conducteur.

Le but de l'invention est de proposer un système robuste de sélection automatique de microphone pour un système à deux micros (l'invention pouvant bien évidemment s'appliquer à la commutation d'un micro parmi plus de deux micros, par l'application des mêmes algorithmes à chaque paire de micros possibles).

L'idée sous-jacente est que, quelle que soit la configuration des micros (rapprochés ou éloignés), il est possible de différencier les prises de son effectuées par chacun des micros en faisant l'hypothèse que le signal capté par l'un des deux micros sera meilleur que l'autre, c'est-à-dire que l'un des micros sera plus à même de capter le signal désiré avec moins de perturbations ou de pertes que l'autre micro.

L'un des principes de base de l'invention consiste à dériver à cet effet un indice de confiance de présence d'une parole pour chacune des deux voies correspondant aux deux micros, et de conditionner la sélection de l'un ou de l'autre de ces micros à une règle de décision fonction, entre autres, de cet indice de confiance de présence d'une parole.

Ce principe permet d'accroître de façon substantielle la robustesse de la sélection du micro de référence au cours du temps, en fonction de résultats calculés en permanence, en adaptant cette sélection à l'évolution des divers biais et aux variations de l'environnement acoustique.

Les buts précités sont atteints par un procédé du type général divulgué le EP 1 564 980 A1 précité, c'est-à-dire un procédé de sélection d'un microphone parmi deux microphones ou plus, pour un système de traitement de la parole multi-microphone opérant dans un environnement bruité, chacun des microphones étant associé à une voie et étant apte à capter un signal acoustique bruité comprenant une composante utile de parole issue d'une source principale de signal acoustique mêlée à une composante de bruit diffus. Ce procédé comprend des étapes de :

- numérisation des signaux acoustiques captés simultanément par les deux microphones ;
- exécution d'une transformation des signaux captés sur les deux voies, de manière à produire une succession de trames dans une série de bandes de fréquences ;
- application d'un algorithme de calcul d'un indice de présence de parole sur chaque voie ;
- sélection de l'un des deux microphones par application aux trames successives de chacune des voies d'une règle de décision fonction à la fois d'un critère de sélection de voie et dudit indice de présence de parole ; et
- mise en oeuvre du traitement de la parole à partir du signal acoustique capté par le seul microphone sélectionné.

De façon caractéristique de l'invention :

- la transformation des signaux captés sur les deux voies est une transformation de Fourier à court terme ;
- l'indice de présence de parole est un indice de confiance calculé pour chaque bande de fréquences de chaque trame ; et
- le critère de sélection est calculé par bandes de fréquences sur les seules bandes de fréquences dont l'indice de confiance est supérieur à un premier seuil donné.

Selon diverses caractéristiques subsidiaires de mise en oeuvre:

- le procédé comprend en outre une étape d'élimination, dans les trames successives, des bandes de fréquences situées au-dessous d'un deuxième seuil donné ;
- l'indice de confiance de présence de parole est une probabilité de présence de parole ;
- l'indice de confiance de présence de parole est calculé pour chaque bande de fréquences, et la sélection est opérée si l'indice est supérieur à un troisième seuil donné, dans un nombre de bandes de fréquences supérieur à un quatrième seuil donné ;
- le système de traitement de la parole multi-microphone est un système à microphones directifs rapprochés, et le critère de sélection de voie est un critère angulaire basé sur une comparaison des phases respectives des signaux simultanément captés sur les deux voies, le microphone à sélectionner étant celui pour lequel le signal est capté avant l'autre ;
- le système de traitement de la parole multi-microphone est un système à microphones directifs ou non-directifs éloignés, et le critère de sélection de voie est un critère énergétique basé sur une comparaison des valeurs de rapport signal sur bruit respectives des signaux simultanément captés sur les deux voies, le microphone à sélectionner étant celui pour lequel le rapport signal sur bruit est supérieur à l'autre ;
- la sélection de l'un des deux microphones est opérée conditionnellement seulement si la règle de décision est vérifiée sur un nombre de trames successives supérieur à un cinquième seuil donné ;
- si une sélection de l'un des microphones est décidée, celle-ci est opéré de façon progressive sur un laps de temps de transition donné, par application d'un gain croissant à la voie du microphone à sélectionner et d'un gain décroissant à la voie du microphone à désélectionner.

On va maintenant décrire un exemple de mise en oeuvre du dispositif de l'invention, en référence aux dessins annexés où les mêmes références désignent des éléments fonctionnellement semblables.

La Figure 1 illustre schématiquement une configuration à deux micros rapprochés.
La Figure 2 illustre schématiquement une configuration à deux micros éloignés.

On va maintenant décrire le principe de base de l'invention, et son application aux deux cas de figure évoqués plus haut (micros rapprochés et micros éloignés).

L'hypothèse de base est que l'un des signaux captés par les deux micros est *a priori* meilleur que l'autre, c'est-à-dire qu'il contient moins de perturbations ou de pertes que l'autre par rapport au signal de parole utile.

Le but de l'invention est de déterminer parmi les deux signaux captés quel est le meilleur, afin d'appliquer ultérieurement un traitement de la parole (débruitage, annulation d'écho, etc.) à ce seul signal sélectionné, ci-après "signal de référence" ou "signal issu du micro de référence".

Deux micros captent un signal émis par une source de signal principale s, et la différence de position entre les micros va induire un ensemble de déphasages et de variations d'amplitude par rapport au signal émis par s. Plus précisément, on aura en fonction de l'instant t :

$$x_n(t) = a_n \times s(t - \tau_n) + v_n(t)$$

où $a_n$ est l'atténuation d'amplitude due à la perte d'énergie sur le trajet acoustique compris entre la position de la source sonore s et le micro indicé $n$, $\tau_n$ est le déphasage entre le signal émis et reçu par le micro $n$, le terme supplémentaire $v_n$ représentant la valeur du champ de bruit diffus à l'endroit où se trouve le micro $n$.

Si l'on note en majuscules les transformées de Fourier à court terme des signaux ci-dessus, il vient :

$$X_n(k,l) = d_n(k) \times S(k,l) + V_n(k,l)$$

où $k$ et $l$ désignent respectivement la bande de fréquences et la trame considérée, avec :

$$d_n(k) = a_n e^{-i2\pi f_k \tau_n}$$

où $f_k$ est la fréquence centrale de la bande de fréquences indicée par $k$.

On notera que les coefficients $d_n(k)$ dépendent uniquement des données géométriques du système et non de la nature du signal émis s. Ces coefficients sont d'ailleurs caractéristiques de la configuration géométrique considérée.

On va maintenant envisager deux cas de figure, à savoir :

- configuration à micros rapprochés, où l'on considérera que la distance entre les deux micros est petite devant la distance entre la source et les micros (une définition mathématique plus précise de cette condition sera donnée plus bas) ; et
- configuration à micros éloignés, où l'on considérera que la distance entre la source et l'un des deux micros est relativement plus grande qu'entre la source et l'autre micro.

*Configuration à microphones rapprochés*

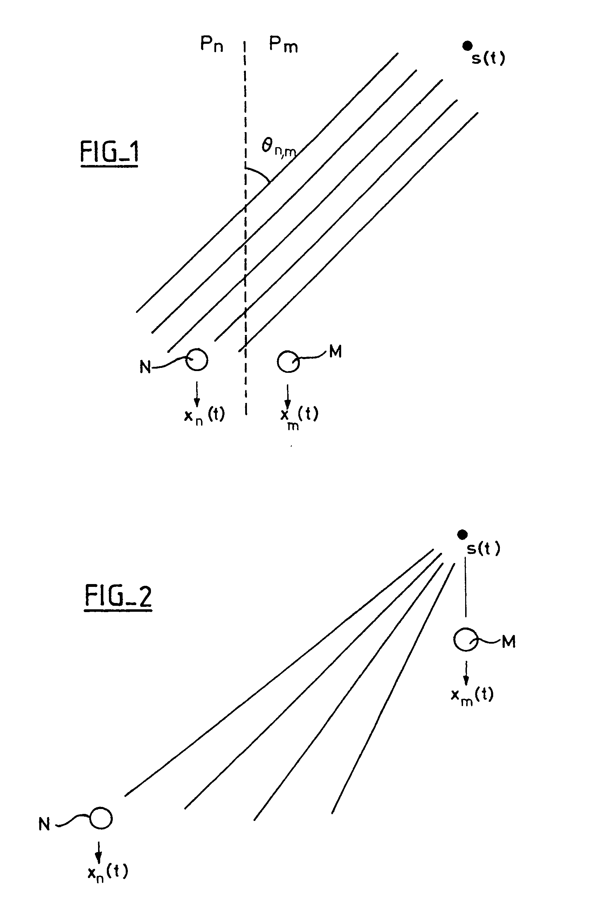

Cette configuration, illustrée schématiquement Figure 1, se rencontre par exemple dans le cas où les deux micros sont disposés au niveau de la façade d'un autoradio, lui-même placé en position centrale sur le tableau de bord du véhicule. La distance entre les micros est typiquement de l'ordre de 5 cm, au maximum 10 cm.

On utilisera très avantageusement dans cette configuration des micros directifs, orientés de façon différente. Si l'on désigne $N$ et $M$ les deux micros, le micro $M$ aura, idéalement, un diagramme de directivité dont le lobe principal couvre le demi-plan $P_m$, tandis que le micro $N$ aura un diagramme de directivité occupant l'autre demi-plan $P_n$.

Dans le cas considéré ici de micros proches, on pourra faire l'approximation que la source sonore émet une onde plane (il suffit que la source soit éloigné d'au moins quelques centimètres des micros) et l'on cherchera simplement à évaluer la direction de propagation de l'onde en question (dans l'espace ou en projection sur un plan particulier). Seule l'information de déphasage entre les micros sera alors utile, et l'on utilisera alors la formule :

$$\tau_n - \tau_m = \frac{1}{2\pi f_k} \arg\left(E\left(\overline{X}_m(k,l)X_n(k,l)\right)\right)$$

où $E$ désigne l'espérance mathématique, qui pourra être évaluée par le calcul de la valeur moyenne du produit considéré sur plusieurs trames.

L'hypothèse de "micros rapprochés" peut s'exprimer de manière plus précise par une condition sur la distance $l_{n,m}$ entre les deux micros, le déphasage $\Delta\phi$ entre $x_n(t)$ et $x_m(t)$ devant appartenir à l'intervalle $[-\pi;\pi]$ pour éviter les confusions entre retards et avances, soit :

$$|\Delta\phi| = \left|\frac{2\pi f_k . l_{n,m}}{c} . \sin\theta_{n,m}\right| < \frac{2\pi f_k . l_{n,m}}{c} < \pi$$

Si toutefois la distance $D$ est plus grande, il est possible d'utiliser le même algorithme, mais en retirant de l'ensemble analysé les plus hautes fréquences. La fréquence maximale s'exprimera alors :

$$f_{\max} < \frac{c}{2.l_{n,m}}$$

Il suffit de déterminer dans lequel des deux demi-plans $Pn$ ou $Pm$ se situe la source. Le problème se ramène donc à l'étude du signe de l'expression $\arg(E(\overline{X}_m(k,l)X_n(k,l)))$ :

$$sign\left[\theta_{n,m}(k,l)\right] = sign\left[\tau_n - \tau_m\right] = sign\left[\arg\left(E\left(\overline{X}_m(k,l)X_n(k,l)\right)\right)\right]$$

Théoriquement, pour une trame donnée, les angles $\theta_{n,m}(k,l)$ devraient être les mêmes pour toutes les fréquences. En pratique, la composante de bruit introduit de légères variations. Le signe de :

$$\tau_n - \tau_m = \frac{1}{2\pi f_k} \arg\left(E\left(\overline{X}_m(k,l)X_n(k,l)\right)\right)$$

va donc être calculé pour différentes fréquences, et une décision globale sera prise en fonction de la répartition des résultats par fréquences, en calculant une somme de décisions élémentaires non pondérées.

En pratique, divers bruits de phase entrent en jeu et pour de faibles valeurs de $\theta_{n,m}(k,l)$ la détermination du signe de $(\theta_{n,m}(k,l)$ peut être biaisée. Toutefois, la formule :

$$\frac{2\pi f_k l_{n,m}}{c}\left(\tau_n - \tau_m\right) + \phi_{bruit} = \arg\left(E\left(\overline{X}_m(k,l)X_n(k,l)\right)\right)$$

met en évidence le fait que le terme de bruit aura moins d'impact dans les hautes fréquences. Par conséquent, les calculs réalisés pour de faibles valeurs de $k$ seront moins fiables, notamment si l'angle d'incidence du signal est petit. Il sera donc souhaitable d'utiliser une pondération avec un indice de confiance plus élevé dans les hautes fréquences.

Comme il ne s'agit pas ici d'une moyenne, mais seulement d'un décompte des signes sur un ensemble de fréquences, on peut exclure de ce calcul les fréquences les plus basses (celles pour lesquelles $k \leq k_{\min}$). En définitive, la règle de sélection sera la suivante (*NbPlusThreshold* étant un seuil prédéterminé) :

pour la trame *l* :

- $M$ est meilleur micro si $Card(E_+)$ - $Card(E_-)$ > *NbPlusThreshold*
- $N$ est meilleur micro si $Card(E_-)$ - $Card(E_+)$ > *NbPlusThreshold*
- Aucune décision sinon

avec :

$$\begin{cases} E_+ = \left\{k \; t.q. \; k > k_{\min} \; et \; \arg\left(E\left(\overline{X}_m(k,l)X_n(k,l)\right)\right) > 0\right\} \\ E_- = \left\{k \; t.q. \; k > k_{\min} \; et \; \arg\left(E\left(\overline{X}_m(k,l)X_n(k,l)\right)\right) < 0\right\} \end{cases}$$

En d'autres termes, au lieu de mesurer l'angle d'incidence du signal issu de la source à partir des déphasages relatifs des signaux captés par les micros, on détermine le signe de l'expression ci-dessus pour chaque bande d'un sous-ensemble de bandes de fréquences, et l'on décompte ces signes. Si le décompte montre une majorité significative (déterminée par le seuil *NbPlusThreshold*) en faveur de l'un des micros $N$ ou $M$, alors celui-ci sera considéré comme le micro de référence.

*Configuration à deux micros éloignés*

Cette configuration est illustrée schématiquement Figure 2.
La distance entre les micros est ici de l'ordre de 1 à 1,5 m, correspondant par exemple à une installation dans laquelle les deux micros sont placés de chaque côté du plafonnier de l'habitacle du véhicule.
Dans cette configuration, l'information de déphasage n'est plus exploitable car la distance entre les deux microphones est trop élevée (corrélation insuffisante et confusion entre retard et avance).
En revanche, les termes $a_n$ et $a_m$ d'atténuation du signal sont beaucoup plus pertinents. En effet, dans le signal capté globalement par l'un des micros, la contribution de la source, c'est-à-dire le signal utile, sera d'autant plus faible que ce micro sera éloigné de ladite source.
Il n'est ici plus nécessaire d'utiliser des micros directifs pour différencier les deux prises de son. En effet, cette différenciation sera intrinsèque à la position des micros par rapport à la source : par exemple, dans le cas d'une automobile, l'un des micros sera beaucoup plus proche du conducteur et l'autre, du passager. Le bruit sera donc toujours plus atténué dans le signal capté par l'un des micros que dans le signal capté par l'autre.
Le principe de base consiste, dans ces conditions, à utiliser comme critère de sélection la valeur du rapport signal/bruit. Le critère de sélection n'est donc plus un critère angulaire, comme dans les cas des micros rapprochés, mais un critère énergétique.
La décision sera prise par rapport à un seuil $\Delta$*SNRThreshold* sur le même principe que pour le critère angulaire dans la configuration en micros rapprochés. La règne de décision sera la suivante :

pour la trame *l* :

- $M$ est meilleur micro si $SNR_m(l)$ - $SNR_n(l)$ > $\Delta$*SNRThreshold*
- $N$ est meilleur micro si $SNR_n(l)$ - $SNR_m(l)$ > $\Delta$*SNRThreshold*
- Aucune décision sinon

avec :

$$SNR_m(l) = \frac{\sum_k X_m(k,l)}{\sum_k \hat{V}_m(k,l)} \quad et \quad SNR_n(l) = \frac{\sum_k X_n(k,l)}{\sum_k \hat{V}_n(k,l)}$$

$\hat{V}_m(k,l)$ et $\hat{V}_n(k,l)$ désignant les estimées de la composante de bruit respectivement captée par les micros *M* et *N*.

*Renforcement de la robustesse de la sélection du micro de référence*

Les techniques de sélection automatique du micro de référence sont sujettes à divers biais liés au bruit et aux approximations de calcul.

Pour éviter un trop grand nombre de mauvaises détections, la présente invention propose de compléter ces techniques de sélection automatique par un mécanisme global procurant une très grande robustesse aux bruits diffus, et efficace quelle que soit la technique de traitement appliquée ensuite au signal de référence sélectionné (intercorrélation, sommation, ...). Essentiellement, l'invention propose de dériver un indice de confiance de présence de parole dans chacun des signaux captés par les micros, et de conditionner la sélection du micro de référence à un niveau minimal de cet indice de confiance de présence de parole.

Il est en effet inutile de vouloir sélectionner l'un des deux micros plutôt que l'autre si le signal utile de la source (la parole du locuteur) est nul. Il conviendra donc de n'appliquer les critères de sélection indiqués plus haut que sur les trames pour lesquelles le signal de la source est - vraisemblablement - présent.

L'indice de confiance peut être notamment une probabilité de présence de parole, calculée de la manière décrite par le WO 2007/099222 A1 (Parrot SA) par exemple, qui décrit un procédé de débruitage impliquant le calcul d'une telle probabilité, procédé dérivé d'une technique exposée par I. Cohen et B. Berdugo, Speech Enhancement for Non-Stationary Noise Environments, Signal Processing, Elsevier, Vol. 81, pp. 2403-2418, 2001.

Le calcul d'une probabilité de présence de parole (ou toute autre technique connue comparable), décrit dans le cadre d'un traitement de réduction de bruit pour lequel le signal de la source correspond à un signal de parole, peut être appliqué à la présente invention pour accroître la robustesse de l'algorithme de sélection du micro de référence (avant donc tout traitement de débruitage).

Comme fréquemment dans le domaine du débruitage d'un signal de parole mêlé à une composante de bruit, il ne s'agit pas d'identifier précisément sur quelles composantes fréquentielles de quelles trames la parole est présente ou absente, mais de fournir un indice de confiance compris entre 0 et 1, une valeur 1 indiquant que la parole est (selon l'algorithme) absente à coup sûr, tandis qu'une valeur 0 indique le contraire. De par sa nature, cet indice est assimilable à la probabilité d'absence de la parole *a priori*, c'est à dire la probabilité que la parole soit absente sur une composante fréquentielle donnée de la trame considérée.

La probabilité de présence de parole $P_{\mathrm{PresPr}oba}$ peut donc être utilisée comme un critère supplémentaire pour conditionner la sélection d'un micro ou de l'autre, en la comparant à un seuil *prédéterminé PresProba-Threshold* : on ne retiendra ainsi, pour appliquer la règle de sélection, que l'ensemble *F(l)* des "fréquences pertinentes" telles que l'on ait, pour chaque trame *l* du signal :

$$F(l) = \left\{ k\, t.q.\, P_{\mathrm{Pr}\,es\,\mathrm{Pr}\,oba}(k,l) > \mathrm{Pr}\,es\,\mathrm{Pr}\,obaTreshold \right\}$$

Si cet ensemble formé des fréquences contenues dans le signal utile est trop petit (c'est-à-dire si *Card(F(l))* <*MinSize*), on ne prendra aucune décision pour la trame courante *l*. Ce critère permet, au même titre que l'introduction des seuils *NbPlusThreshold* ou *ΔSNRThreshold,* de limiter et de contrôler le nombre de décisions erronées.

Dans le cas contraire (c'est-à-dire si *Card (F(l)) > MinSize*), le calcul de sélection du meilleur micro sera effectué à partir des seules fréquences pertinentes, les fréquences pour lesquelles le contenu de la source est nul (pas de parole) n'étant pas retenues pour la prise de décision.

Les deux règles explicitées plus haut de sélection du meilleur micro pour une trame se réécrivent donc comme suit.

Dans le premier cas de figure (micros rapprochés) :

pour la trame *l*

　· *M* est meilleur micro si Card(*E+*) - Card(*E_*) > *NbPlusThreshold* et si Card(*F(l)*) > *MinSize*
　· *N* est meilleur micro si Card(*E_*) - Card(*E_+*) > *NbPlusThreshold* et si Card(*F(l)*) > *MinSize*
　· Aucune décision sinon

avec :

$$\begin{cases} E_+ = \left\{ k \in F(l) \ \ t.q. \ k > k_{\min} \ et \ \arg\!\left(E\!\left(\overline{X}_m(k,l)X_n(k,l)\right)\right) > 0 \right\} \\ E_- = \left\{ k \in F(l) \ \ t.q. \ k > k_{\min} \ et \ \arg\!\left(E\!\left(\overline{X}_m(k,l)X_n(k,l)\right)\right) < 0 \right\} \end{cases}$$

Dans le second cas de figure (micros éloignés) :

pour la trame *l*

- *M* est meilleur micro si $SNR_m(l) - SNR_n(l) > \Delta SNRThreshold$ et si Card($F(l)$) > *MinSize*
- *N* est meilleur micro si $SNR_n(l) - SNR_m(l) > \Delta SNRThreshold$ et si Card($F(l)$) > *MinSize*
- Aucune décision sinon

avec :

$$SNR_m(l) = \frac{\sum_{k \in F(l)} X_m(k,l)}{\sum_{k \in F(l)} \hat{V}_m(k,l)} \quad et \quad SNR_n(l) = \frac{\sum_{k \in F(l)} X_n(k,l)}{\sum_{k \in F(l)} \hat{V}_n(k,l)}.$$

*Changement de microphone de référence*

L'un des intérêts du système selon l'invention est de pouvoir suivre les déplacements de la source, donc de changer de micro de référence au cours du temps lorsque la source est mobile, ou que deux sources émettent en alternance (par exemple le conducteur et le passager du véhicule). Pour disposer d'un système stable, il est toutefois important de ne pas changer de micro trop brutalement ni trop fréquemment.

Pour ce faire, l'invention propose également de rendre plus robuste les phases de changement de micro de référence.

Pour éviter les commutations intempestives, il est possible de conditionner la commutation d'un micro de référence vers l'autre (*M* au lieu de *N*, ou l'inverse) à un certain nombre de règles de stabilité telles que :

- le micro de référence ne sera modifié que si plusieurs itérations consécutives de l'algorithme de sélection du meilleur micro par trame conduisent à une décision de changement de micro de référence et/ou
- le changement de micro ne sera pas soudain, mais sera opéré progressivement, sur plusieurs trames consécutives en appliquant un gain variable, croissant sur l'un des micros et décroissant sur l'autre, de manière à obtenir un effet de "fondu" progressif.

**Revendications**

1. Un procédé de sélection d'un microphone parmi deux microphones ou plus, pour un système de traitement de la parole multi-microphone opérant dans un environnement bruité, chacun des microphones étant associé à une voie et étant apte à capter un signal acoustique bruité comprenant une composante utile de parole issue d'une source principale (*s*(*t*)) de signal acoustique mêlée à une composante de bruit diffus, ce procédé comprenant les étapes suivantes :

    - numérisation des signaux acoustiques captés simultanément par les deux microphones (*N, M*) ;
    - transformation des signaux ($x_n(t)$, $x_m(t)$) captés sur les deux voies, de manière à produire une succession de trames dans une série de bandes de fréquences ;
    - application d'un algorithme de calcul d'un indice de présence de parole sur chaque voie ;
    - sélection de l'un des deux microphones par application aux trames successives de chacune des voies d'une règle de décision fonction à la fois d'un critère de sélection de voie et dudit indice de présence de parole ; et
    - mise en oeuvre du traitement de la parole à partir du signal acoustique capté par le seul microphone sélectionné,

procédé **caractérisé en ce que** :

- ladite transformation des signaux ($x_n(t)$, $x_m(t)$) captés sur les deux voies est une transformation de Fourier à court terme ;
- ledit indice de présence de parole est un indice de confiance calculé pour chaque bande de fréquences de chaque trame ; et
- ledit critère de sélection est calculé par bandes de fréquences sur les seules bandes de fréquences dont l'indice de confiance est supérieur à un premier seuil donné.

2. Le procédé de la revendication 1, comprenant en outre une étape d'élimination, dans les trames successives, des bandes de fréquences situées au-dessous d'un deuxième seuil donné.

3. Le procédé de la revendication 1, dans lequel l'indice de confiance de présence de parole est une probabilité de présence de parole.

4. Le procédé de la revendication 1, dans lequel l'indice de confiance de présence de parole est calculé pour chaque bande de fréquences, et ladite sélection est opérée si l'indice est supérieur à un troisième seuil donné, dans un nombre de bandes de fréquences supérieur à un quatrième seuil donné.

5. Le procédé de la revendication 1, dans lequel :

- ledit système de traitement de la parole multi-microphone est un système à microphones directifs rapprochés, et
- ledit critère de sélection de voie est un critère angulaire basé sur une comparaison des phases respectives des signaux simultanément captés sur les deux voies, le microphone à sélectionner étant celui pour lequel le signal est capté avant l'autre.

6. Le procédé de la revendication 1, dans lequel :

- ledit système de traitement de la parole multi-microphone est un système à microphones directifs ou non-directifs éloignés, et
- ledit critère de sélection de voie est un critère énergétique basé sur une comparaison des valeurs de rapport signal sur bruit respectives des signaux simultanément captés sur les deux voies, le microphone à sélectionner étant celui pour lequel le rapport signal sur bruit est supérieur à l'autre.

7. Le procédé de la revendication 1, dans lequel la sélection de l'un des deux microphones est opérée conditionnellement seulement si ladite règle de décision est vérifiée sur un nombre de trames successives supérieur à un cinquième seuil donné.

8. Le procédé de la revendication 1, dans lequel, si une sélection de l'un des microphones est décidée, celle-ci est opéré de façon progressive sur un laps de temps de transition donné, par application d'un gain croissant à la voie du microphone à sélectionner et d'un gain décroissant à la voie du microphone à désélectionner.


**Patentansprüche**

1. Verfahren zur Auswahl eines Mikrofons unter zwei oder mehr Mikrofonen für ein Multimikrofon-Sprachverarbeitungssystem, das in einer verrauschten Umgebung arbeitet, wobei jedes der Mikrofone einem Kanal zugeordnet und fähig ist, ein verrauschtes akustisches Signal aufzufangen, das eine von einer Hauptsignalquelle ($s(t)$) eines akustischen Signals stammende Sprachnutzkomponente mit einer diffusen Rauschkomponente vermischt enthält, wobei dieses Verfahren die folgenden Schritte enthält:

- Digitalisierung der gleichzeitig von den zwei Mikrofonen ($N$, $M$) aufgefangenen akustischen Signale;
- Umwandlung der auf den zwei Kanälen aufgefangenen Signale ($x_n(t)$, $x_m(t)$), um eine Folge von Rahmen in einer Reihe von Frequenzbändern zu erzeugen;
- Anwendung eines Berechnungsalgorithmus eines Sprachpräsenzindex in jedem Kanal;
- Auswahl eines der zwei Mikrofone durch Anwendung einer Entscheidungsregel an die aufeinanderfolgenden Rahmen jedes der Kanäle abhängig sowohl von einem Kanalauswahlkriterium als auch vom Sprachpräsenzindex; und

- Durchführung der Sprachverarbeitung ausgehend von dem vom einzigen ausgewählten Mikrofon aufgefangenen akustischen Signal,

wobei das Verfahren **dadurch gekennzeichnet ist, dass**:

- die Umwandlung der in den zwei Kanälen aufgefangenen Signale ($x_n(t)$, $x_m(t)$) eine Kurzzeit-Fourier-Transformation ist;
- der Sprachpräsenzindex ein Vertrauensindex ist, der für jedes Frequenzband jedes Rahmens berechnet wird; und
- das Auswahlkriterium in den Frequenzbändern nur in den Frequenzbändern berechnet wird, deren Vertrauensindex höher ist als eine erste gegebene Schwelle.

2. Verfahren nach Anspruch 1, das außerdem einen Schritt des Entfernens, in den aufeinanderfolgenden Rahmen, der Frequenzbänder enthält, die sich unter einer zweiten gegebenen Schwelle befinden.

3. Verfahren nach Anspruch 1, wobei der Sprachpräsenz-Vertrauensindex eine Wahrscheinlichkeit einer Sprachpräsenz ist.

4. Verfahren nach Anspruch 1, wobei der Sprachpräsenz-Vertrauensindex für jedes Frequenzband berechnet wird, und die Auswahl durchgeführt wird, wenn der Index höher als eine dritte gegebene Schwelle in einer Anzahl von Frequenzbändern ist, die höher ist als eine vierte gegebene Schwelle.

5. Verfahren nach Anspruch 1, wobei:

- das Multimikrofon-Sprachverarbeitungssystem ein System mit nahen Richtmikrofonen ist, und
- das Kanalauswahlsystem ein Winkelkriterium ist, basierend auf einem Vergleich der jeweiligen Phasen der Signale, die gleichzeitig in den zwei Kanälen aufgefangen werden, wobei das auszuwählende Mikrofon dasjenige das, dessen Signal vor dem anderen aufgefangen wird.

6. Verfahren nach Anspruch 1, wobei:

- das Multimikrofon-Sprachverarbeitungssystem ein System mit entfernten Richtmikrofonen oder nicht richtenden Mikrofonen ist, und
- das Kanalauswahlkriterium ein energetisches Kriterium ist, basierend auf einem Vergleich der jeweiligen Signal-Rausch-Verhältnis-Werte der gleichzeitig in den zwei Kanälen aufgefangenen Signale, wobei das auszuwählende Mikrofon dasjenige ist, bei dem das Signal-Rausch-Verhältnis höher ist als das andere.

7. Verfahren nach Anspruch 1, wobei die Auswahl eines der zwei Mikrofone bedingt nur dann ausgeführt wird, wenn die Entscheidungsregel bei einer Anzahl von aufeinanderfolgenden Rahmen größer als eine fünfte gegebene Schwelle erfüllt wird.

8. Verfahren nach Anspruch 1, wobei, wenn eine Auswahl eines der Mikrofone getroffen wird, diese progressiv in einem gegebenen Übergangszeitraum durch Anwendung einer zunehmenden Verstärkung an den Kanal des auszuwählenden Mikrofons und einer abnehmenden Verstärkung an den Kanal des zu deaktivierenden Mikrofons durchgeführt wird.


**Claims**

1. A method for selecting a microphone among two microphones or more, for a multi-microphone speech processing system operating in a noisy environment, each of the microphones being associated with a channel and being adapted to pick up a noisy acoustic signal comprising a useful component of speech coming from a main source ($s(t)$) of acoustic signal mixed with a component of diffuse noise, the method comprising the steps of:

- digitizing the acoustic signals picked up simultaneously by the two microphones ($N$, $M$);
- transforming the signals ($x_n(t)$, $x_m(t)$) picked up on the two channels, so as to produce a succession of frames in a series of frequency bands;
- applying an algorithm for calculating a speech-presence index on each channel;

- selecting one of the two microphones by applying to the successive frames of each of the channels a decision rule based on both a channel selection criterion and said speech-presence index; and
- implementing the speech processing from the acoustic signal picked up by the only one microphone selected,

the method being **characterized in that**:

- said transformation of the signals ($x_n(t)$, $x_m(t)$) picked up on the two channels is a short-term Fourier transform;
- said speech-presence index is a reliability index calculated for each frequency band of each frame; and
- said selection criterion is calculated on a per frequency band basis on the only frequency bands whose reliability index is higher than a first given threshold.

2. The method of claim 1, further comprising a step of eliminating, in the successive frames, the frequency bands located below a second given threshold.

3. The method of claim 1, wherein the speech-presence reliability index is a speech-presence probability.

4. The method of claim 1, wherein the speech-presence reliability index is calculated for each frequency band, and said selection is operated if the index is higher than a third given threshold, in a number of frequency bands higher than a fourth given threshold.

5. The method of claim 1, wherein:

- said multi-microphone speech processing system is a system with close directive microphones, and
- said channel selection criterion is an angular criterion based on a comparison of the respective phases of the signals simultaneously picked up on the two channels, the microphone to be selected being that for which the signal is picked up before the other.

6. The method of claim 1, wherein:

- said multi-microphone speech processing system is a system with distant directive or non-directive microphones, and
- said channel selection criterion is an energetic criterion based on a comparison of the respective signal-to-noise-ratio values of the signals simultaneously picked-up on the two channels, the microphone to be selected being that for which the signal to noise ratio is higher than the other.

7. The method of claim 1, wherein the selection of one of the two microphones is conditionally operated only if said decision rule is verified on a number of successive frames higher than a fifth given threshold.

8. The method of claim 1, wherein, if a selection of one of the microphones is decided, the latter is operated progressively over a given transition period of time, by applying an increasing gain to the channel of the microphone to be selected and a decreasing gain to the channel of the microphone to be unselected.

FIG_1

FIG_2

**EP 2 430 825 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008049982 A1, Parrot SA
- EP 1564980 A1
- WO 2007099222 A1, Parrot SA

**Littérature non-brevet citée dans la description**

- Speech Enhancement for Non-Stationary Noise Environments. **I. COHEN ; B. BERDUGO.** Signal Processing. Elsevier, 2001, vol. 81, 2403-2418